# EUROPÄISCHE PATENTSCHRIFT

(11) **EP 0 653 431 B1**
(45) Veröffentlichungstag und Bekanntmachung des Hinweises auf die Patenterteilung: **01.03.2000**
(21) Anmeldenummer: 94117325.4
(22) Anmeldetag: 03.11.1994
(51) Int. Cl.: C07F 9/50, C07F 9/53

(54) **Bis-(phosphinoalkoxi)-biarylverbindungen und ein Verfahren zu ihrer Herstellung**
Bis-(phosphinoalkoxy)-biaryl compounds and a process for preparing them
Composés bis-(phosphinoalcoxy)-biaryliques et un procédé pour leur préparation

(30) Priorität: 13.11.1993 DE 4338825
(43) Veröffentlichungstag der Anmeldung: 17.05.1995
(73) Patentinhaber: Celanese Chemicals Europe GmbH, 60439 Frankfurt am Main (DE)
(72) Erfinder: Regnat, Dieter, Dr., D-60529 Frankfurt (DE); Kleiner, Hans-Jerg, Dr., D-61476 Kronberg (DE)

(56) Entgegenhaltungen:
- WO-A-87/07600

## Beschreibung

Die vorliegende Erfindung betrifft neue Bis-(phosphinoalkoxi)-biarylverbindungen und ein Verfahren zu ihrer Herstellung.
Verbindungen, die zwei Phosphinogruppen im Molekül enthalten (zweizähnige Phosphinliganden), spielen in einer Reihe von Verfahren, in denen Übergangsmetallkomplexe als Katalysator Anwendung finden, eine wichtige Rolle. Siehe auch A. Miyashita et al. in Tetrahedron Lett. 34, (1993), 2351 und in J. Am. Chem. Soc. 102, (1980), 7932; R. Noyori et al., Tetrahedron 40, (1984), 1245; H. Takaya, Tetrahedron Lett. 34, (1993) 1615. Als Beispiele für derartige Verfahren seien beispielsweise Hydrierungs-, Hydroformylierungs-und Carbonylierungsreaktionen oder die Alkylierung und die Arylierung von Aromaten genannt. Optisch aktive zweizähnige Phospinliganden werden in enantiomerenreiner Form auch als Hilfstoffe für die Durchführung von enantioselektiv katalysierten Prozessen eingesetzt wie beispielsweise aus P. Salvadori, Synthesis 1992, 503 und U. Nagel, Angew. Chem. 105, (1993), 1099 hervorgeht.

In Hinblick auf die Vielfalt der Einsatzmöglichkeiten zweizähniger Phosphinliganden besteht ein Bedarf an neuen zweizähnigen Phosphinliganden, um einerseits das Spektrum ihrer Anwendungsmöglichkeiten zu ergänzen und zu erweitern und andererseits bestimmte Reaktionen besonders günstig durchführen zu können.

Diese Aufgabe wird gelöst durch Phosphorverbindungen (racemische und enantiomerenreine zweizähnige Phospinliganden) der allgemeinen Formel 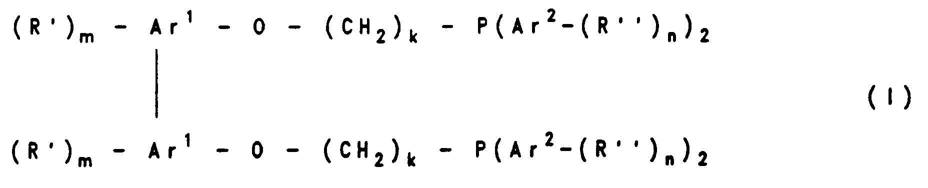 in der (RS)-, (R)- und (S)-Form, worin Ar¹-Ar¹ für einen Biphenylrest, 1-Phenylnaphthylrest oder 1,1'-Binaphthylrest, R', falls vorhanden, jeweils unabhängig voneinander für F, einen Alkyl- oder Alkoxirest mit jeweils 1 bis 8 Kohlenstoffatomen, m für eine ganze Zahl von 0 bis 4, k für eine ganze Zahl von 1 bis 4, Ar² für einen Phenyl- oder Naphthylrest, R'', falls vorhanden, jeweils unabhängig voneinander für F, Cl, CF₃, SO₃H, SO₃Me (Me = Li, Na, K), einen Dialkylaminorest mit 2 bis 8 Kohlenstoffatomen, einen Alkyl- oder Alkoxirest mit jeweils 1 bis 8 Kohlenstoffatomen und n für eine ganze Zahl von 0 bis 5 steht.

Von Interesse sind Phosphorverbindungen in denen 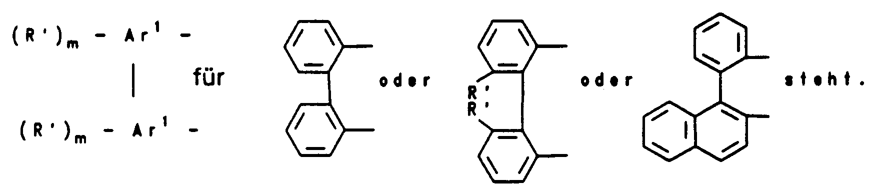 Eine gewisse Bedeutung kommt Phosphorverbindungen zu, in denen Ar¹-Ar¹ für einen 1,1'-Binaphthylrest und m für 0 oder 1, insbesondere für 0 steht.
k steht für eine ganze Zahl von 1 bis 4, insbesondere für 1 oder 3, bevorzugt für 1. R'' steht, falls vorhanden, jeweils unabhängig voneinander für F, Cl, CF₃, SO₃H, SO₃Me (Me = Li, Na, K) insbesondere für F, CF₃ oder einen Alkylrest mit 1 bis 4 Kohlenstoffatomen.
n steht für eine ganze Zahl von 0 bis 5, insbesondere für 0 oder 1.

R' repräsentiert, falls vorhanden, jeweils unabhängig voneinander F, einen Alkyl-oder Alkoxyrest mit jeweils 1 bis 8 Kohlenstoffatomen.

Die Phosphorverbindungen der Formel (I) liegen entweder als racemisches Gemisch, d.h. in der (RS)-Form, oder in enantiomerenreiner oder weitgehend enantiomerenreiner (R)- oder (S)-Form vor.
Die erfindungsgemäßen Phosphorverbindungen der Formel (I) eignen sich für Alkylierungen und Arylierungen von Aromaten, insbesondere für die Arylierung von Aromaten, beispielsweise für die Kupplung von Halogenaromaten mit Arylmagnesiumhalogenid-Verbindungen. Die Kupplung von 1-Brom-2-methylnaphthalin mit einem Naphthalinmagnesiumbromid in Gegenwart eines die Phosphorverbindungen der Formel I enthaltenden Pd-Katalysators ist Gegenstand einer am gleichen Tag wie die vorliegende Erfindung eingereichten Anmeldung (P 43 38 826.4). Diese Anmeldung wurde als EP 0653396 veröffentlicht.

Ohne den Anspruch auf Vollständigkeit zu erheben, seien als Phosphorverbindungen der Formel (1) folgende Verbindungen genannt:
(RS)-2,2'-Bis-(diphenylphosphinomethoxi)-1,1'-binaphthyl
(R)-2,2'-Bis-(diphenylphosphinomethoxi)-1,1'-binaphthyl
(S)-2,2'-Bis-(diphenylphosphinomethoxi)-1,1'-binaphthyl
(RS)-2,2'-Bis-[(di-2-tolylphosphino)methoxi]-1,1'-binaphthyl
(R)-2,2'-Bis-[(di-2-tolylphosphino)methoxi]-1,1'-binaphthyl
(S)-2,2'-Bis-[(di-2-tolylphosphino)methoxi]-1,1'-binaphthyl
(RS)-2,2'-Bis-[(di-4-tolylphosphino)methoxi]-1,1'-binaphthyl
(R)-2,2'-Bis-[(di-4-tolylphosphino)methoxi]-1,1'-binaphthyl
(S)-2,2'-Bis-[(di-4-tolylphosphino]methoxi]-1,1'-binaphthyl
(RS)-2,2'-Bis-[(di-4-methoxiphenylphosphino)methoxi]-1,1'-binaphthyl
(R)-2,2'-Bis-[(di-4-methoxiphenylphosphino)methoxi]-1,1'-binaphthyl
(S)-2,2'-Bis-[(di-4-methoxiphenylphosphino)methoxi]-1,1'-binaphthyl
(RS)-2,2'-Bis-[(di-4-fluorphenylphosphino)methoxi]-1,1'-binaphthyl
(R)-2,2'-Bis-[(di-4-fluorphenylphosphino)methoxi]-1,1'-binaphthyl
(S)-2,2'-Bis-[(di-4-fluorphenylphosphino)methoxi]-1,1'-binaphthyl
(RS)-2,2'-Bis-(2-diphenylphospinoethoxi)-1,1'-binaphthyl
(R)-2,2'-Bis-(2-diphenylphosphinoethoxi)-1,1'-binaphthyl
(S)-2,2'-Bis-(2-diphenylphosphinoethoxi)-1,1'-binaphthyl
(RS)-2,2'-Bis-(3-diphenylphosphinopropoxi)-1,1'-binaphthyl
(R)-2,2'-Bis-(3-diphenylphosphinopropoxi)-1,1'-binaphthyl
(S)-2,2'-Bis-(3-diphenylphosphinopropoxi)-1,1'-binaphthyl
(RS)-6,6'-Difluor-2,2'-bis-(diphenylphosphinomethoxi)-biphenyl
(R)-6,6'-Difluor-2,2'-bis-(diphenylphosphinomethoxi)-biphenyl
(S)-6,6'-Difluor-2,2'-bis-(diphenylphosphinomethoxi)-biphenyl
(RS)-3,3',5,5'-Tetrakis-tert.-butyl-2,2'-bis-(diphenylphosphinomethoxi)-biphenyl.

Die Erfindung betrifft ferner Phosphorverbindungen (IV) der allgemeinen Formel 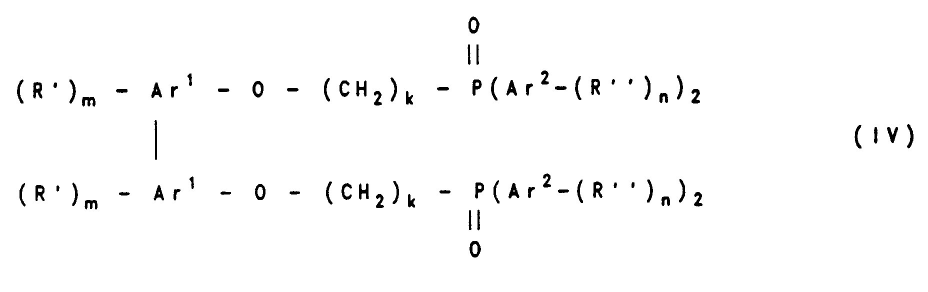 in der (RS)-, (R)- und (S)-Form, worin R', m, Ar¹-Ar¹, k, Ar², R'' und n die vorstehend genannte Bedeutung besitzen. Die Phosphorverbindungen der allgemeinen Formel (IV) lassen sich mit gutem Erfolg für die Extraktion von Metallionen aus wäßrigen Lösungen verwenden.

Ohne Anspruch auf Vollständigkeit zu erheben, seien als Phosphorverbindung der allgemeinen Formel (IV) folgende Verbindungen genannt:
(RS)-2,2'-Bis-(diphenylphosphinylmethoxi)-1,1'-binaphtyl
(R)-2,2'-Bis-(diphenylphosphinylmethoxi)-1,1'binaphthyl
(S)-2,2'-Bis-(diphenylphosphinylmethoxi)-1,1'binaphthyl
(RS)-2,2'-Bis-[(di-2-tolylphosphinyl)methoxi]-1,1'-binaphthyl
(R)-2,2'-Bis-[(di-2-tolylphosphinyl)methoxi]-1,1'-binaphthyl
(S)-2,2'-Bis-[(di-2-tolylphosphinyl)methoxi]-1,1'-binaphthyl
(RS)-2,2'-Bis-[(di-4-tolylphosphinyl)methoxi]-1,1'-binaphthyl
(R)-2,2'-Bis-[(di-4-tolylphosphinyl)methoxi]-1,1'binaphthyl
(S)-2,2'-Bis-[(di-4-tolylphosphinyl)methoxi]-1,1'binaphthyl
(RS)-2,2'-Bis-[(di-4-methoxiphenylphosphinyl)methoxi]-1,1'-binaphthyl
(R)-2,2'-Bis-(di-4-methoxiphenylphosphinyl)methoxi]-1,1'-binaphthyl
(S)-2,2'-Bis-[(di-4-methoxiphenylphosphinyl)methoxi]-1,1'-binaphthyl
(RS)-2,2'-Bis-[(di-4-fluorphenylphosphinyl)methoxi]-1,1'-binaphthyl
(R)-2,2'-Bis[(di-4-fluorphenylphosphinyl)methoxi]-1,1'-binaphthyl
(S)-2,2'-Bis-[(di-4-fluorphenylphosphinyl)methoxi]-1,1'-binaphthyl
(RS)-2,2'-Bis-(2-diphenylphosphinylethoxi)-1,1'-binaphthyl
(R)-2,2'-Bis-(2-diphenylphosphinylethoxi)-1,1'-binaphthyl
(S)-2,2'-Bis-(2-diphenylphosphinylethoxi)-1,1'-binaphthyl
(RS)-2,2'-Bis-(3-diphenylphosphinylpropoxi)-1,1'-binaphthyl
(R)-2,2'-Bis-(3-diphenylphosphinylpropoxi)-1,1'-binaphthyl
(S)-2,2'-Bis-(3-diphenylphosphinylpropoxi)-1,1'-binaphthyl
(RS)-6,6'-Difluor-2,2'-bis-(diphenylphosphinylmethoxi)-biphenyl
(R)-6,6'-Difluor-2,2'-bis-(diphenylphosphinylmethoxi)-biphenyl
(S)-6,6'-Difluor-2,2'-bis-(diphenylphosphinylmethoxi)-biphenyl
(RS)-3,3',5,5-Tetrakis-tert.-butyl-2,2'-bis-(diphenylphosphinylmethoxi)-biphenyl.

Weiterhin betrifft die vorliegende Erfindung ein Verfahren zur Herstellung der Phosphorverbindungen der allgemeinen Formel (I) und (IV). Es ist dadurch gekennzeichnet, daß man eine Verbindung (II) der allgemeinen Formel 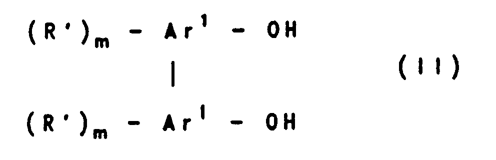 in der (RS)-, (R)- oder (S)-Form, worin R', m und Ar¹-Ar¹ die vorstehend genannte Bedeutung besitzen, mit einer Verbindung (III) der allgemeinen Formel 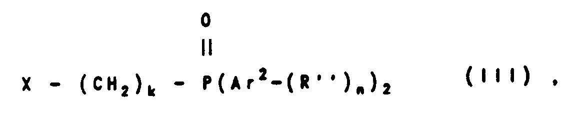 worin k, Ar², R'' und n die vorstehend genannte Bedeutung besitzen, und X für Cl, Br, J, eine Tosylat-, Trifluormethansulfonat-, Mesylat- oder Fluorsulfonatgruppe steht, unter Zusatz eines Protonen entziehenden Mittels und in Gegenwart eines Lösungsmittels zu der Verbindung (IV) der allgemeinen Formel 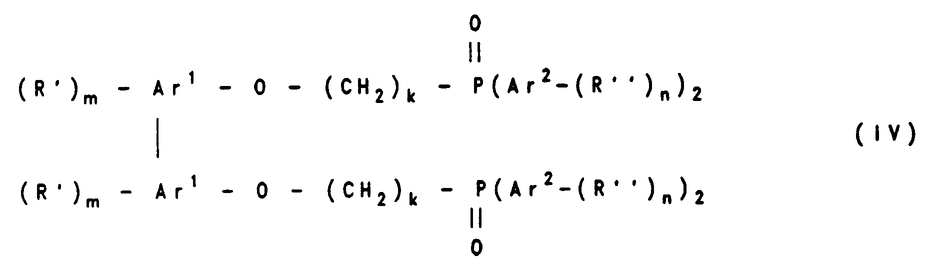 umsetzt und die Verbindung (IV) anschließend reduziert.

Das erfindungsgemäße Verfahren ermöglicht es, sowohl die neuen Bis-phosphinoxide (IV) als auch die neuen Bis-(phosphinoalkoxi)-biaryle (I) auf einfache Weise herzustellen. Vorteilhaft ist hierbei, daß die als Ausgangsstoffe benötigten Di-hydroxybiaryl-Verbindungen der allgemeinen Formel (II) leicht zugänglich sind [R. Pummerer et al., Chem. Ber., 59 B (1926) 2159 bis 2175; K. Kushioka, J. Org. Chem., 49 (1984) 4456 bis 4459] und zum Teil auch in technischen Mengen zur Verfügung gestellt werden können. Die Synthese der Bis-(phosphinoalkoxi)-biaryle verläuft über die Bis-phosphinoxide (II) in zwei Stufen. Jede dieser zwei Stufen liefert das jeweils gewünschte Wertprodukt in hoher Ausbeute. Die Verbindungen der allgemeinen Formel (IV) und (I) sind unter den Reaktionsbedingungen in unerwarteter Weise stabil. So erfolgt überraschenderweise bei der Aufarbeitung selbst in Gegenwart von konzentrierter Natronlauge keine Spaltung der -O-(CH₂)ₖ-P-Gruppe.

Ein weiterer Vorteil des erfindungsgemäßen Verfahrens besteht darin, daß es nicht nur racemische Gemische der Bis-phosphinoxide (IV) und der Bis-(phosphinoalkoxi)-biaryle (I) sondern - ausgehend von enantiomerenreinen oder weitgehend enantiomerenreinen Dihydroxybiaryl-Verbindungen (I) - diese Verbindungen der Formel (I) und (IV) auch in enantiomerenreiner oder in weitgehend enantiomerenreiner Form zugänglich macht.

Um zu enantiomerenreinen oder weitgehend enantiomerenreinen Diphosphinen oder Diphosphinoxiden zu gelangen, ist es üblicherweise notwendig, deren racemische Mischungen einer Racematspaltung zu unterziehen (R. Noyori, J. Org. Chem., 51 (1986) 629). Es ist jedoch bekannt, daß derartige Racematspaltungen in der Regel mit einem hohen Aufwand verbunden sind und häufig nicht zum Erfolg führen.

Durch das erfindungsgemäße Verfahren eröffnet sich ein direkter Syntheseweg zu enantiomerenreinen oder weitgehend enantiomerenreinen Bis-phosphinoxiden (IV) und Bisphosphinen der allgemeinen Formel (I), ohne daß eine aufwendige und hinsichtlich des Erfolges unsichere Racematspaltung durchgeführt werden muß. Dies stellt gegenüber den herkömmlichen Verfahren eine erhebliche Vereinfachung dar.

Üblicherweise setzt man die Verbindung (II) in der (RS)-, (R)- oder (S)-Form mit mindestens der stöchiometrischen Menge des Protonen entziehenden Mittels in einem polar aprotischen Lösungsmittel oder in einem unpolaren Lösungsmittel und mit 2 bis 5 Äquivalenten der Verbindung (III), bezogen auf Verbindung (II), um. Als polar aprotisches Lösungsmittel kommen Tetrahydrofuran oder Dioxan, insbesondere Dioxan in Betracht. Geeignete unpolare Lösungsmittel sind Toluol, o-Xylol, m-Xylol, p-Xylol, technische Gemische isomerer Xylole, Ethylbenzol oder Mesitylen, insbesondere Toluol oder technische Gemische isomerer Xylole.

In einer Reihe von Fällen hat es sich als nützlich erwiesen, die Verbindung (II) mit 2 bis 2,5 Äquivalenten der Verbindung (III) umzusetzen.
Als Protonen entziehendes Mittel setzt man eine starke Base ein. Geeignete Basen stellen Verbindungen der Formel R'''-M dar, worin R''' für H einen Alkylrest mit 1 bis 10 Kohlenstoffatomen, einen Amidrest NR₂'''' (R'''' = H, C₁₋₁₀-Alkyl) und M für Li, Na, K oder Cs steht, oder ein Alkali-hexaalkyldisilazid dar.
Gut geeignet als Protonen entziehendes Mittel sind Natriumhydrid, Kaliumhydrid, n-Butyllithium, Methyllithium, tert.-Butyllithium, Natriumamid, Lithiumtetramethylpiperidid, Lithiumdiisopropylamid und/oder Lithiumhexamethyldisilazid, insbesondere Natriumhydrid, Natriumamid, bevorzugt Natriumhydrid.

Die Herstellung der Phosphorverbindungen der Formel (IV) erfolgt durch Umsetzung der Hydroxyaryl-Verbindungen (II) mit dem protonenentziehenden Mittel, indem man die deprotonierte Verbindung, gegebenenfalls mit einem Lösungmittel versetzt, vorlegt und zu dieser Lösung bzw. dieser Suspension die Verbindung (III) zusetzt. Es ist allerdings auch möglich, die Verbindung (III), gegebenenfalls mit einem Lösungsmittel versetzt, vorzulegen und zu dieser Lösung oder Suspension die gegebenenfalls mit einem Lösungsmittel versetzte deprotonierte Verbindung zuzusetzen.

Man setzt die Verbindung (II) und das Protonen entziehende Mittel im Verhältnis 1:(2 bis 3), insbesondere 1:(2 bis 2,2) bei -20 bis 100 °C, insbesondere 25 bis 80°C um und erhält dabei eine entsprechend deprotonierte Verbindung.
Besonders einfach gestaltet sich das Verfahren, wenn man die Verbindung (II) mit Natriumhydrid in Xylol bei 25 bis 50 °C umsetzt.
Im Anschluß hieran setzt man die deprotonierte Verbindung und die Verbindung (III) im Verhältnis 1:(1,8 bis 2,5), insbesondere 1:(2,0 bis 2,2) bei 25 bis 180, insbesondere 60 bis 160 °C um und erhält die Verbindung (IV).

Die Verbindung (IV) wird anschließend in einem aprotischen Lösungsmittel zu der Verbindung (I) reduziert. Geeignete aprotische Lösungsmittel sind Toluol, o-Xylol, m-Xylol, p-Xylol, technische Gemische isomerer Xylole, Dioxan, Acetonitril, insbesondere Toluol, ein Xylol oder technische Gemische isomerer Xylole. Die Reduktion der Verbindung (IV) läßt sich mit Trichlorsilan auf einfache Weise durchführen. In einer Reihe von Fällen ist es hilfreich, die Verbindung (IV) in Gegenwart einer Base zu reduzieren. Als Base setzt man ein Trialkylamin, insbesondere Triethylamin, in die Stufe der Reduktion ein.
Falls gewünscht, kann man sowohl die Umsetzung als auch die Reduktion unter dem Schutz einer Inertgas-Atmosphäre durchzuführen. Dies kann die Reaktion, beispielsweise im Sinne einer Ausbeuteerhöhung, günstig beeinflussen. Die nachfolgenden Beispiele belegen die Erfindung ohne sie zu beschränken.

### Experimenteller Teil:

### Beispiel 1: (RS)-2,2'-Bis-(diphenylphosphinylmethoxi)-1,1'-binaphthyl

Unter Luft- und Feuchtigkeitsausschluß werden 1,5 g (0,05 mol) einer 80 %igen Suspension von Natriumhydrid in Paraffinöl in 100 ml o-Xylol vorgelegt und 7,16 g (0,025 mol) 1,1'-Bi-2,2'-naphthol zugegeben. Man erwärmt 2 h auf 50 °C und gibt dann 14,8 g (0,05 mol) Brommethyl-diphenylphosphanoxid zu. Man erhitzt 3 Stunden zum Rückfluß, kühlt auf 25 °C ab und filtriert den Feststoff ab. Man digeriert mit 100 ml Ethylacetat und extrahiert mit 100 ml Wasser. Die organische Phase wird mit Magnesiumsulfat getrocknet und eingeengt. Man erhält 17 g beigen Feststoff und nach Umkristallisation aus Ethylacetat 15,2 g (85 %) farblose Kristalle mit Schmp. 251,5 - 253 °C.

| C₄₆ H₃₆ O₄ P₂ (714,74) | | |
|---|---|---|
| ber.: C 77,3 % | H 5,1 % | P 8,7 % |
| gef.: C 77,2 % | H 5,2 % | P 8,7 % |

³¹P-NMR: δ(CDCl₃) = 25,9 ppm

### Beispiel 2: (RS)-2,2'-Bis-(diphenylphosphinomethoxi)-1,1'-binaphthyl

Unter Luft- und Feuchtigkeitsausschluß werden 15,8 g (0,022 mol) 2,2'-Bis-(diphenylphosphinylmethoxi)-1,1'-binaphthyl, 10,6 g (0,105 mol) Triethylamin in 150 ml entgastem Toluol vorgelegt und 13,5 g (0,10 mol) Trichlorsilan zugetropft. Man erwärmt unter Rühren 8 Stunden auf 100 bis 105 °C, kühlt auf 0 °C ab und gibt dann 100 ml 32 %ige, entgaste Natronlauge zu, trennt die Phasen, trocknet die organische Phase mit Magnesiumsulfat und engt ein. Man erhält 14,9 g blaßgelben Feststoff und nach Kristallisation mit entgastem Aceton 13,7 g (91 %) farblose Kristalle mit Schmp. 153 - 154 °C.
³¹P-NMR: δ(CDCl₃) = -15,5 ppm

### Beispiel 3: (R)-2,2'-Bis-(diphenylphospinylmethoxi)-1,1'-binaphthyl:

Analog Beispiel 1 erhält man aus (R)-1,1'-Bi-2,2'-naphthol mit gleicher Ausbeute (85 %) (R)-2,2'-Bis-(diphenylphosphinylmethoxi)-1,1'-binaphthyl mit einem ee von 98,5 % (HPLC, chirale Säule)

### Beispiel 4: (R)-2,2'-Bis-(diphenylphosphinomethoxi)-1,1'-binaphthyl:

Analog Beispiel 2 erhält man aus (R)-2,2'-Bis-(diphenylphosphinylmethoxi)-1,1'-binaphthyl (Beispiel 3) in gleicher Ausbeute (91 %) (R)-2,2'-Bis-(diphenylphospinomethoxi)-1,1'-binaphthyl mit einem ee von > 99 % (HPLC, chirale Säule, Bestimmung nach Oxidation des Biphosphans zum Bis-phosphanoxid mit Wasserstoffperoxid).

### Beispiel 5:

### (RS)-3,3',5,5'-Tetrakis-tert.-butyl-2,2'-bis-(diphenylphosphinylmethoxi)-biphenyl

Unter Luft- und Feuchtigkeitsausschluß werden 1,8 g (0,06 mol) einer 80 %igen Suspension von Natriumhydrid in Paraffinöl in 200 ml o-Xylol vorgelegt und 12,32 g (0,03 mol) 3,3',5,5'-Tetrakis-tert.-butyl-2,2'-dihydroxy-biphenyl zugegeben. Man erwärmt 2 Stunden auf 100 °C und gibt dann 14,8 g (0,05 mol) Brommethyl-diphenylphosphanoxid zu. Man erhitzt 3 Stunden zum Rückfluß, kühlt auf 25 °C ab und filtriert den Feststoff ab. Man digeriert mit 100 ml Ethylacetat und extrahiert mit 100 ml Wasser. Die organische Phase wird mit Magnesiumsulfat getrocknet und eingeengt. Man erhält 21,7 g beigen Feststoff und nach Umkristallisation aus Ethylacetat 19,2g (76 %) farblose Kristalle mit Schmp. 211-212 °C.

| C₅₄ H₆₄ O₄ P₂ (839,05) | | |
|---|---|---|
| Ber. C 77.3 % | H 7.7 % | P 7.3 % |
| Gef. C 77.4 % | H 7.7 % | P 7.3 % |

³¹P-NMR: δ(CDCl₃) = 25,87 ppm

### Beispiel 6:

### (RS)-3,3',5,5'-Tetrakis-tert.-butyl-2,2'-bis-(diphenylphosphinomethoxi)-biphenyl:

Unter Luft- und Feuchtigkeitsausschluß werden 17,8 g (0,021 mol) (RS)-3,3',5,5'-Tetrakis-tert.-butyl-2,2'-bis-(diphenylphosphinylmethoxi)-biphenyl, 10,0 g (0,10 mol) Triethylamin in 150 ml entgastem Toluol vorgelegt und 13,5 g (0,10 mol) Trichlorsilan zugetropft. Man erwärmt unter Rühren 8 Stunden auf 100-105 °C, kühlt auf 0 °C ab und gibt dann 100 ml 32 %ige, entgaste Natronlauge zu, trennt die Phasen, trocknet die organische Phase mit Magnesiumsulfat und engt ein. Man erhält 15,3 g blaßgelben Feststoff und nach Kristallisation mit entgastem Aceton 14,5 g (85 %) farblose Kristalle mit Schmp. 185 - 187 °C.
³¹P-NMR: δ(CDCl₃) = -19,6 ppm

## Patentansprüche

1. Phosphorverbindungen der allgemeinen Formel 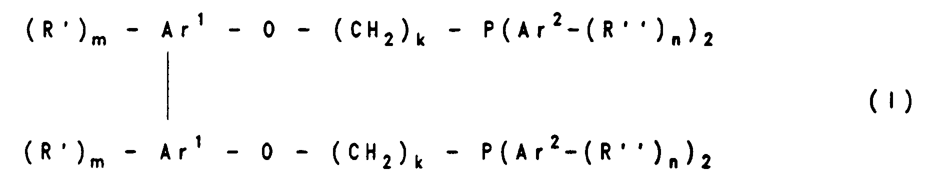 in der (RS)-, (R)- und (S)-Form, worin Ar¹-Ar¹ für einen Biphenylrest, 1-Phenylnaphthylrest oder 1,1'-Binaphthylrest, R', falls vorhanden, jeweils unabhängig voneinander für F, einen Alkyl- oder Alkoxyrest mit jeweils 1 bis 8 Kohlenstoffatomen, m für eine ganze Zahl von 0 bis 4, k für eine ganze Zahl von 1 bis 4, Ar² für einen Phenyl- oder Naphthylrest, R'', falls vorhanden, jeweils unabhängig voneinander für F, Cl, CF₃, SO₃H, SO₃Me (Me = Li, Na, K), einen Dialkylaminorest mit 2 bis 8 Kohlenstoffatomen, einen Alkyl- oder Alkoxyrest mit jeweils 1 bis 8 Kohlenstoffatomen und n für eine ganze Zahl von 0 bis 5 steht.

2. Phosphorverbindungen nach Anspruch 1, dadurch gekennzeichnet, 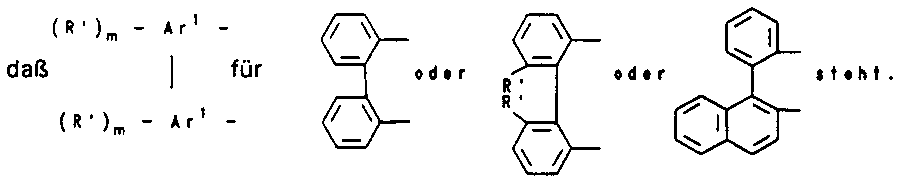 steht.

3. Phosphorverbindungen nach Anspruch 1, dadurch gekennzeichnet, daß Ar¹ - Ar¹ für einen 1,1'-Binaphthylrest und m für 0 oder 1 steht.

4. Phosphorverbindungen nach Anspruch 1 oder 3, dadurch gekennzeichnet, daß Ar¹ - Ar¹ für einen 1,1'-Binaphthylrest und m für 0 steht.

5. Phosphorverbindungen nach einem oder mehreren der Ansprüche 1 bis 4, dadurch gekennzeichnet, daß k für 1 oder 3 steht.

6. Phosphorverbindungen nach einem oder mehreren der Ansprüche 1 bis 5, dadurch gekennzeichnet, daß k für 1 steht.

7. Phosphorverbindungen nach einem oder mehreren der Ansprüche 1 bis 6, dadurch gekennzeichnet, daß R'' für F, CF₃ oder einen Alkylrest mit 1 bis 4 Kohlenstoffatomen steht.

8. Phosphorverbindungen nach einem oder mehreren der Ansprüche 1 bis 7, dadurch gekennzeichnet, daß n für 0 oder 1 steht.

9. (RS)-2,2'-Bis-(diphenylphosphinomethoxi)-1,1'-binaphthyl, (R)-2,2'-Bis-(diphenylphosphinomethoxi)-1,1'-binaphthyl und (S)-2,2'-Bis-(diphenylphosphinomethoxi)-1,1'-binaphthyl.

10. Phosphorverbindungen der allgemeinen Formel 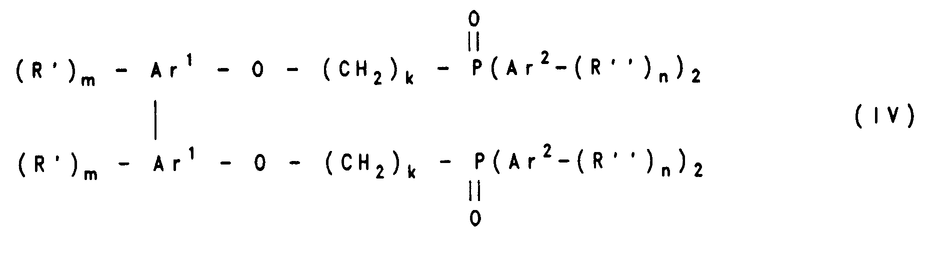 in der (RS)-, (R)- und (S)-Form, worin R', m, Ar¹-Ar¹, k, Ar², R'' und n die vorstehend genannte Bedeutung besitzen.

11. Verfahren zur Herstellung der Phosphorverbindungen nach einem oder mehreren der Ansprüche 1 bis 9, dadurch gekennzeichnet, daß man eine Verbindung (II) der allgemeinen Formel 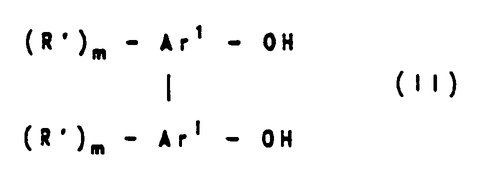 in der (RS)-, (R)- oder (S)-Form, worin R', m und Ar¹-Ar¹ die vorstehend genannte Bedeutung besitzen, mit einer Verbindung (III) der allgemeinen Formel 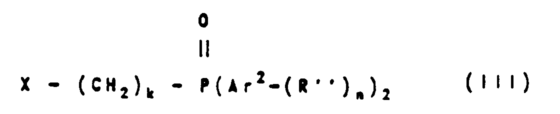 worin k, Ar², R'' und n die vorstehend genannte Bedeutung besitzen und X für Cl, Br, I, eine Tosylat-, Trifluormethansulfonat-, Mesylat- oder Fluorsulfonatgruppe steht unter Zusatz eines Protonen entziehenden Mittels und in Gegenwart eines Lösungsmittels zu der Verbindung (IV) der allgemeinen Formel 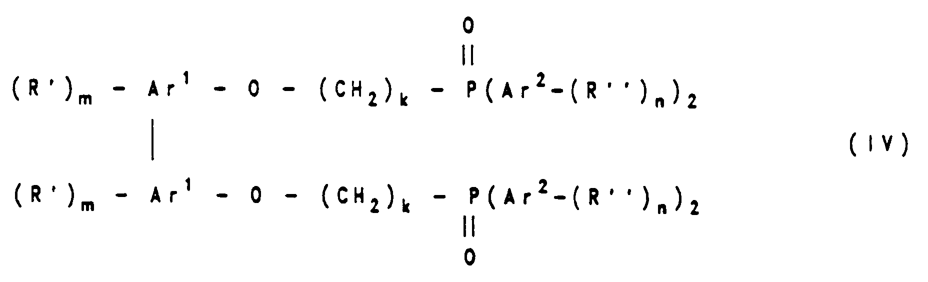 umsetzt und die Verbindung (IV) anschließend reduziert.

12. Verfahren nach Anspruch 11, dadurch gekennzeichnet, daß man die Verbindung (III) in der (RS)-, (R)- oder (S)-Form mit mindestens der stöchiometrischen Menge des Protonen entziehenden Mittels in einem polar aprotischen Lösungsmittel oder in einem unpolaren Lösungsmittel und mit 2 bis 5 Äquivalenten der Verbindung (III), bezogen auf Verbindung (II), umsetzt.

13. Verfahren nach Anspruch 11 oder 12, dadurch gekennzeichnet, daß man die Verbindung (II) mit 2 bis 2,5 Äquivalenten der Verbindung (III) umsetzt.

14. Verfahren nach einem oder mehreren der Ansprüche 11 bis 13, dadurch gekennzeichnet, daß man als Protonen entziehendes Mittel eine starke Base einsetzt.

15. Verfahren nach einem oder mehreren der Ansprüche 11 bis 14, dadurch gekennzeichnet, daß man als Protonen entziehendes Mittel eine starke Base R'''-M, worin R''' für H, einen Alkylrest mit 1 bis 10 Kohlenstoffatomen, einen Amidrest NR₂'''' (R'''' = H, C₁ bis C₁₀-alkyl) und M für Li, Na, K oder Cs steht, oder ein Alkali-hexaalkyldisilazid einsetzt.

16. Verfahren nach einem oder mehreren der Ansprüche 11 bis 15, dadurch gekennzeichnet, daß man als Protonen entziehendes Mittel Natriumhydrid, Kaliumhydrid, n-Butyllithium, Methyllithium, tert.-Butyllithium, Natriumamid, Lithiumtetramethylpiperitid, Lithiumdiisopropylamid und/oder Lithiumhexamethyldisilazid einsetzt.

17. Verfahren nach einem oder mehreren der Ansprüche 11 bis 16, dadurch gekennzeichnet, daß man die Verbindung (II) und das Protonen entziehende Mittel im Verhältnis 1:(2 bis 3), insbesondere 1:(2 bis 2,2) bei -20 bis 100°C zu einer deprotonierten Verbindung umsetzt.

18. Verfahren nach einem oder mehreren der Ansprüche 11 bis 17, dadurch gekennzeichnet, daß man die Verbindung (II) mit Natriumhydrid in Xylol bei 25 bis 50°C umsetzt.

19. Verfahren nach einem oder mehreren der Ansprüche 11 bis 17, dadurch gekennzeichnet, daß man die deprotonierte Verbindung und die Verbindung (III) im Verhältnis 1:(1,8 bis 2,5), insbesondere 1:(2,0 bis 2,2) bei 25 bis 180, insbesondere 60 bis 160°C umsetzt.

20. Verfahren nach einem oder mehreren der Ansprüche 11 bis 19, dadurch gekennzeichnet, daß man die Verbindung (IV) in einem aprotischen Lösungsmittel reduziert.

21. Verfahren nach einem oder mehreren der Ansprüche 11 bis 20, dadurch gekennzeichnet, daß man die Verbindung (IV) mit Trichlorsilan reduziert.

22. Verfahren nach einem oder mehreren der Ansprüche 11 bis 21, dadurch gekennzeichnet, daß man die Verbindung (IV) in Gegenwart einer Base reduziert.

23. Verfahren nach einem oder mehreren der Ansprüche 11 bis 22, dadurch gekennzeichnet, daß man als Base ein Trialkylamin, insbesondere Triethylamin, in der Reduktion einsetzt.

24. Verfahren nach einem oder mehreren der Ansprüche 11 bis 23, dadurch gekennzeichnet, daß man die Umsetzung und Reduktion unter Inertgas durchführt.

## Claims

1. A phosphorus compound of the formula 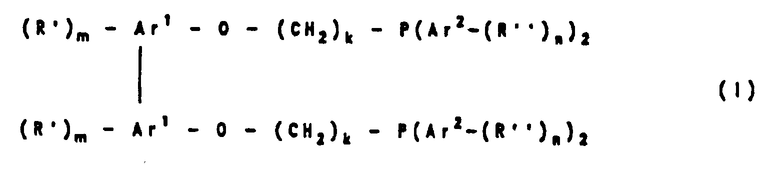 in the (RS), (R) and (S) forms, in which Ar¹-Ar¹ is a biphenyl radical, 1-phenylnaphthyl radical or 1,1'-binaphthyl radical, each R', if present, independently of the others, is F, an alkyl or alkoxy radical each having 1 to 8 carbon atoms, m is an integer from 0 to 4, k is an integer from 1 to 4, Ar² is a phenyl or naphthyl radical, each R'', if present, is, independently of the others, F, Cl, CF₃, SO₃H, SO₃Me (Me is Li, Na, K), a dialkylamino radical having 2 to 8 carbon atoms, an alkyl or alkoxy radical each having 1 to 8 carbon atoms and n is an integer from 0 to 5.

2. A phosphorus compound as claimed in claim 1, wherein

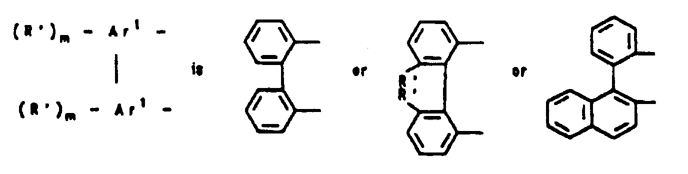

3. A phosphorus compound as claimed in claim 1, wherein Ar¹-Ar¹ is a 1,1'-binaphthyl radical and m is 0 or 1.

4. A phosphorus compound as claimed in claim 1 or 3, wherein Ar¹-Ar¹ is a 1,1'-binaphthyl radical and m is 0.

5. A phosphorus compound as claimed in one or more of claims 1 to 4, wherein k is 1 or 3.

6. A phosphorus compound as claimed in one or more of claims 1 to 5, wherein k is 1.

7. A phosphorus compound as claimed in one or more of claims 1 to 6, wherein R'' is F, CF₃ or an alkyl radical having 1 to 4 carbon atoms.

8. A phosphorus compound as claimed in one or more of claims 1 to 7, wherein n is 0 or 1.

9. (RS)-2,2'-bis(diphenylphosphinomethoxy)-1,1'-binaphthyl, (R)-2,2'-bis(diphenylphosphinomethoxy)-1,1'-binaphthyl and (S)-2,2'-bis(diphenylphosphinomethoxy)-1,1'-binaphthyl.

10. A phosphorus compound of the formula 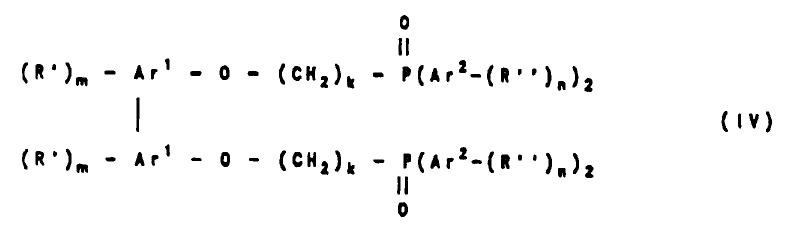 in the (RS), (R) and (S) forms, in which R', m, Ar¹-Ar¹, k, Ar², R'' and n have the abovementioned meaning.

11. A process for preparing a phosphorus compound as claimed in one or more of claims 1 to 9, which comprises reacting a compound (II) of the formula 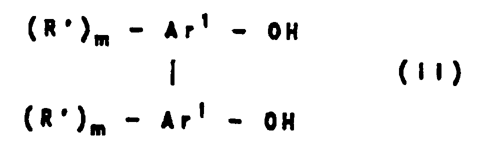 in the (RS), (R) or (S) forms, in which R', m and Ar¹-Ar¹ have the abovementioned meaning, with a compound (III) of the formula 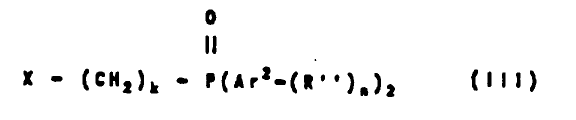 in which k, Ar², R'' and n have the abovementioned meaning and X is Cl, Br, I, a tosylate, trifluoromethanesulfonate, mesylate or fluorosulfonate group, with the addition of a proton-abstracting agent and in the presence of a solvent to give compound (IV) of the formula 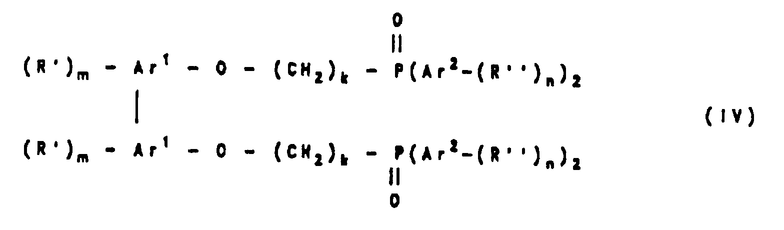 and then reducing compound (IV).

12. The process as claimed in claim 11, wherein compound (II) in the (RS), (R) or (S) forms is reacted with at least a stoichiometric amount of the proton-abstracting agent in a polar aprotic solvent or in a nonpolar solvent and with 2 to 5 equivalents of compound (III), relative to compound (II).

13. The process as claimed in claim 11 or 12, wherein compound (II) is reacted with 2 to 2.5 equivalents of compound (III).

14. The process as claimed in one or more of claims 11 to 13, wherein a strong base is used as the proton-abstracting agent.

15. The process as claimed in one or more of claims 11 to 14, wherein the proton-abstracting agent used is a strong base R'''-M in which R''' is H, an alkyl radical having 1 to 10 carbon atoms, an amide radical NR₂'''' (R'''' is H, C₁- to C₁₀-alkyl) and M is Li, Na, K or Cs, or is an alkali metal hexaalkyldisilazide.

16. The process as claimed in one or more of claims 11 to 15, wherein the proton-abstracting agent used is sodium hydride, potassium hydride, n-butyllithium, methyllithium, tert-butyllithium, sodium amide, lithium tetramethylpiperidide, lithium diisopropylamide and/or lithium hexamethyldisilazide.

17. The process as claimed in one or more of claims 11 to 16, wherein compound (II) and proton-abstracting agent are used in a ratio of 1:(2 to 3), in particular 1:(2 to 2.2), at -20 to 100°C to give a deprotonated compound.

18. The process as claimed in one or more of claims 11 to 17, wherein compound (II) is reacted with sodium hydride in xylene at 25 to 50°C.

19. The process as claimed in one or more of claims 11 to 17, wherein the deprotonated compound and compound (III) are used in a ratio of 1:(1.8 to 2.5), in particular 1:(2.0 to 2.2), at 25 to 180, in particular 60 to 160°C.

20. The process as claimed in one or more of claims 11 to 19, wherein compound (IV) is reduced in an aprotic solvent.

21. The process as claimed in one or more of claims 11 to 20, wherein compound (IV) is reduced with trichlorosilane.

22. The process as claimed in one or more of claims 11 to 21, wherein compound (IV) is reduced in the presence of a base.

23. The process as claimed in one or more of claims 11 to 22, wherein the base used in the reduction is a trialkylamine, in particular triethylamine.

24. The process as claimed in one or more of claims 11 to 23, wherein reaction and reduction are carried out under inert gas.

## Revendications

1. Composés du phosphore de la formule générale 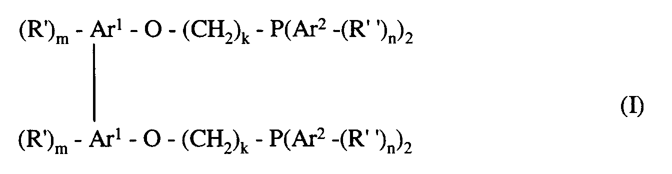 dans la forme (RS), (R) et (S), où Ar¹-Ar¹ représente un reste biphényle, un reste 1-phénylnaphtyle ou un reste 1,1'-binaphtyle, R' s'il est présent représente à chaque fois indépendamment F, un reste alkyle ou alcoxy avec à chaque fois de 1 à 8 atomes de carbone, m représente un nombre entier de 0 à 4, k représente un nombre entier de 1 à 4, Ar² représente un reste phényle ou naphtyle, R'' s'il est présent représente à chaque fois indépendamment F, Cl, CF₃, SO₃H, SO₃Me (Me = Li, Na, K), un reste dialkylamino avec de 2 à 8 atomes de carbone, un reste alkyle ou alcoxy avec à chaque fois de 1 à 8 atomes de carbone et n représente un nombre entier de 0 à 5.

2. Composés du phosphore selon la revendication 1, caractérisés en ce que

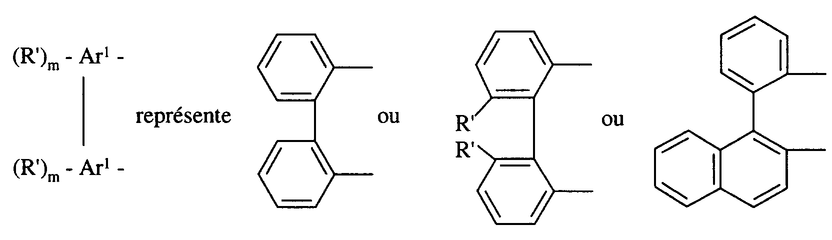

3. Composés du phosphore selon la revendication 1, caractérisés en ce que Ar¹-Ar¹ représente un reste 1,1'-binaphtyle et m représente 0 ou 1.

4. Composés du phosphore selon la revendication 1 ou 3, caractérisés en ce que Ar¹-Ar¹ représente un reste 1,1'-binaphtyle et m représente 0.

5. Composés du phosphore selon l'une ou plusieurs quelconques des revendications 1 à 4, caractérisés en ce que k est égal à 1 ou à 3.

6. Composés du phosphore selon l'une ou plusieurs quelconques des revendications 1 à 5, caractérisés en ce que k est égal à 1.

7. Composés du phosphore selon l'une ou plusieurs quelconques des revendications 1 à 6, caractérisés en ce que R'' représente F, CF₃ ou un reste alkyle avec de 1 à 4 atomes de carbone.

8. Composés du phosphore selon l'une ou plusieurs quelconques des revendications 1 à 7, caractérisés en ce que n est égal à 0 ou à 1.

9. (RS)-2,2'-bis-(diphénylphosphinométhoxy)-1,1'-binaphtyle, (R)-2,2'-bis-(diphénylphosphinométhoxy)-1,1'-binaphtyle et (S)-2,2'-bis-(diphénylphosphinométhoxy)-1,1'-binaphtyle.

10. Composés du phosphore de la formule générale 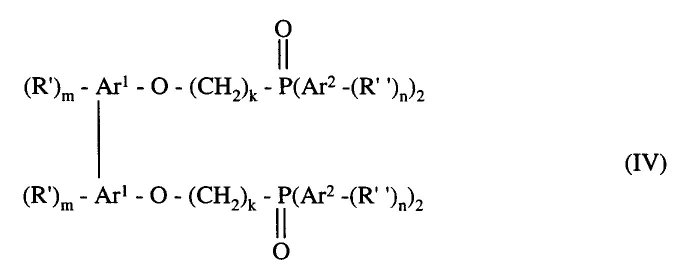 dans la forme (RS), (R) et (S), où R', m, Ar¹-Ar¹, k, Ar², R'' et n ont la signification citée précédemment.

11. Procédé pour la préparation des composés du phosphore selon l'une ou plusieurs quelconques des revendications 1 à 9, caractérisé en ce que l'on fait réagir un composé (II) de la formule générale 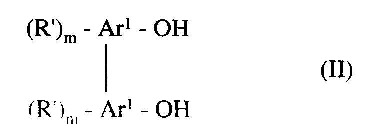 dans la forme (RS), (R) ou (S), où R', m et Ar¹-Ar¹ ont la signification citée précédemment, avec un composé (III) de la formule générale 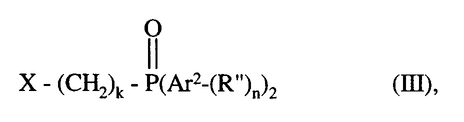 où k, Ar², R'' et n ont la signification citée précédemment, et X représente Cl, Br, I, un groupe tosylate, trifluorométhanesulfonate, mésylate ou fluorosulfonate, avec addition d'un agent prélevant des protons et en présence d'un solvant pour produire le composé (IV) de la formule générale 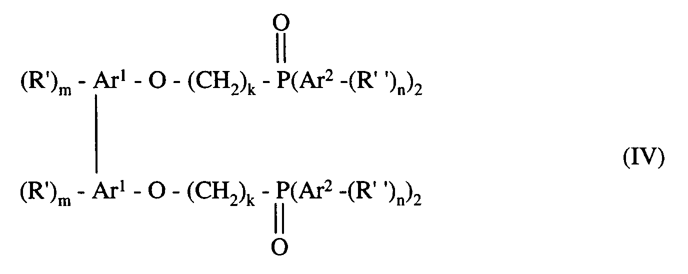 et on réduit ensuite le composé (IV).

12. Procédé selon la revendication 11, caractérisé en ce que l'on fait réagir le composé (II) dans la forme (RS), (R) ou (S) avec au moins la quantité stoechiométrique de l'agent prélevant des protons dans un solvant polaire aprotique ou dans un solvant non polaire et avec de 2 à 5 équivalents du composé (III), rapportés au composé (II).

13. Procédé selon la revendication 11 ou 12, caractérisé en ce que l'on fait réagir le composé (II) avec de 2 à 2,5 équivalents du composé (III).

14. Procédé selon l'une ou plusieurs quelconques des revendications 11 à 13, caractérisé en ce que l'on utilise comme agent prélevant des protons une base forte.

15. Procédé selon lune ou plusieurs quelconques des revendications 11 à 14, caractérisé en ce que l'on utilise comme agent prélevant des protons une base forte R'''-M, où R''' représente H, un reste alkyle avec de 1 à 10 atomes de carbone, un reste amide NR₂'''' (R'''' = H, un groupe alkyle en C₁-C₁₀) et M représente Li, Na, K ou Cs ou un hexaalkyldisilazide d'alcali.

16. Procédé selon l'une ou plusieurs quelconques des revendications 11 à 15, caractérise en ce que l'on utilise comme agent prélevant des protons de l'hydrure de sodium, de l'hydrure de potassium, du n-butyllithium, du méthyllithium, du tert.-butyllithium, du sodiumamide, du lithiumtétraméthyl-pipéridide, du lithiumdiisopropylamide et/ou du lithiumhexaméthyldisilazide.

17. Procédé selon l'une ou plusieurs quelconques des revendications 11 à 16, caractérisé en ce que l'on fait réagir le composé (II) et l'agent prélevant des protons dans un rapport de 1:(2 à 3), en particulier de 1:(2 à 2,2) à de -20 à 100°C pour produire un composé déproténé.

18. Procédé selon l'une ou plusieurs quelconques des revendications 11 à 17, caractérisé en ce que l'on fait réagir le composé (II) avec de l'hydrure de sodium dans du xylène à de 25 à 50°C.

19. Procédé selon l'une ou plusieurs quelconques des revendications 11 à 17, caractérisé en ce que l'on fait réagir le composé déproténé et le composé (III) dans un rapport de 1:(1,8 à 2,5), en particulier de 1:(2,0 à 2,2) à de 25 à 180, en particulier à de 60 à 160°C.

20. Procédé selon l'une ou plusieurs quelconques des revendications 11 à 19, caractérisé en ce que l'on réduit le composé (IV) dans un solvant aprotique.

21. Procédé selon l'une ou plusieurs quelconques des revendications 11 à 20, caractérisé en ce que l'on réduit le composé (IV) avec du trichlorosilane.

22. Procédé selon l'une ou plusieurs quelconques des revendications 11 à 21, caractérisé en ce que l'on réduit le composé (IV) en présence d'une base.

23. Procédé selon l'une ou plusieurs quelconques des revendications 11 à 22, caractérisé en ce que l'on utilise dans la réduction une trialkylamine, en particulier la triéthylamine, comme base.

24. Procédé selon l'une ou plusieurs quelconques des revendications 11 à 23, caractérisé en ce que l'on réalise la réaction et la réduction sous gaz inerte.
